# EUROPÄISCHE PATENTANMELDUNG

(11) **EP 1 109 279 A2**
(43) Veröffentlichungstag der Anmeldung: **20.06.2001**
(21) Anmeldenummer: 00127133.7
(22) Anmeldetag: 12.12.2000
(51) Int. Cl.: H02B 13/065, H02H 1/00

(54) **Verfahren zur Vermeidung des Auftretens von stromstarken Störlichtbögen**

(30) Priorität: 18.12.1999 DE 19961267
(71) Anmelder: Natus GmbH & Co.KG, Elektrotechnische Spezialfabrik für Industrie-Schaltanlagen-Systeme, 54292 Trier (DE)
(72) Erfinder: Brechtken, Dirk, Prof. Dr., D-54329 Konz (DE)
(74) Vertreter: Serwe, Karl-Heinz, Dipl.-Ing.

(57) **Zusammenfassung**

2.0 Stromstarke Störlichtbögen in elektrischen Energieversorgungseinrichtungen und Schaltanlagen für Nieder-, Mittel- und Hochspannungsbereiche stellen trotz vorhandener Überwachungsvorrichtungen ein hohes Gefährdungspotential für Personen dar und verursachen in der Regel in diesen Anlagen erhebliche Schäden.

2.2 Um auf einfache und kostengünstige Weise das Auftreten von stromstarken Störlichtbögen zu verhindern wird vorgeschlagen, bei Erkennen eines in der Anlage auftretenden, einem stromstarken Störlichtbogen vorausgehenden stromschwachen, einphasigen Lichtbogens durch in der Anlage angeordnete Überwachungseinrichtungen eine Abschaltvorrichtung zu betätigen.

## Beschreibung

Die Erfindung betrifft ein Verfahren zur Vermeidung des Auftretens von stromstarken Störlichtbögen in elektrischen Energieversorgungseinrichtungen und Schaltanlagen für Nieder-, Mittel- und Hochspannungsbereiche.

Die Verteilung elektrischer Energie erfolgt in Energieversorgungseinrichtungen und Schaltanlagen. In diese Anordnungen wird an einigen wenigen Stellen die elektrische Energie eingespeist. Diesen wenigen Einspeisepunkten steht jedoch eine Vielzahl von Abgängen gegenüber, über die die Energie weiter zum Endverbraucher transportiert wird.

Die Energieeinspeisung erfolgt über Leitungen, Kabel oder Schienensysteme auf einen Einspeiseschalter. Dieser Schalter kann bei einem Störfall innerhalb der Anlage durch Öffnen der Kontakte die weitere Energiezufuhr in die Fehlerstelle unterbrechen. Ausgangsseitig speist dieser Schalter die Sammelschienensysteme. Von diesen Sammelschienen werden wiederum Leistungsabgänge gespeist. Jeder dieser Abgänge ist wiederum über ein Schaltgerät mit dem Sammelschienensystem verbunden. Im Fall einer Störung kann so selektiv der schadhafte Abgang abgeschaltet werden, ohne den Betrieb benachbarter Abgänge zu beeinträchtigen.

Aus produktionstechnischen Gründen erfolgt der Aufbau von Schaltanlagen herstellerunabhängig in modularer Bauweise. Es werden einzelne Abschnitte, sogenannte Felder, vorgesehen, die je nach Spannungsebene einen oder mehrere Leistungsabgänge enthalten. In Abstimmung zwischen den kundenspezifischen Forderungen und den baulichen Randbedingungen wird durch Aneinanderreihung einer entsprechenden Anzahl von Feldern eine dem Kundenwunsch entsprechende Anlage hergestellt.

Die elektrische Verbindung der einzelnen Anlagenkomponenten erfolgt durch Verschraubungen oder Steckverbindungen. Der Vorteil der Steckverbindung liegt insbesondere in der schnellen Austauschbarkeit gesteckter Komponenten.

In der Regel erfolgt die Energieverteilung dreiphasig zusammen mit einem Nullleiter (N) und einem Erdleiter (PE) oder mit einem gemeinsamen PEN-Leiter. Damit ergibt sich, dass je nach der Größe eines Feldes mehrere Hundert Kontaktstellen erforderlich sind, wobei sich eine Zunahme der Anzahl an Kontaktstellen mit abnehmender Spannungsebene ergibt. Insbesondere in der Niederspannungstechnik können sich daher bereits bei Anlagen mittlerer Größenordnung die Kontaktstellen auf eine Anzahl von mehreren Tausend belaufen.

Die einwandfreie Verbindung aller Kontaktstellen ist eine Voraussetzung für den störungsfreien Betrieb. Trotz sehr geringer Ausfallrate auch auf Grund der großen Erfahrung der Anlagenhersteller bleibt jedoch ein Restrisiko für schlechte Verbindungsstellen bestehen.

Eine schlechte Verbindung führt zunächst zur Erwärmung der Kontaktstelle. Auf Grund der erhöhten Temperatur kommt es zu chemischen Reaktionen mit der Umgebungsatmosphäre. Je nach Zusammensetzung dieser Atmosphäre kommt es vereinzelt zum Einkapseln des Fehlers. Dabei bilden sich um die schadhafte Kontaktstelle chemische Reaktionsprodukte, die die Fehlerstelle von weiterem Kontakt mit der Atmosphäre abschirmen können. In der Regel führt jedoch diese Reaktion zur Erhöhung des elektrischen Widerstandes der Kontaktstelle. Ein höherer elektrischer Widerstand steigert die Verlustleistung in der schlechten Verbindung weiter, sodass es letztendlich zum Aufschmelzen des Kontaktes kommt. An Stelle des Kontaktes stehen sich nun zwei Kontaktstücke in einem sehr geringen Abstand gegenüber. Dieser geringe Abstand führt bereits bei niedrigen Spannungen zur Zündung eines Lichtbogens innerhalb einer Phase, sodass der Strom nahezu unbeeinflusst weiter fließt. Innerhalb der Anlage brennt jedoch jetzt bereits ein stromschwacher Lichtbogen, ohne dass der bereits vorhandene Fehler durch Veränderungen der Stromamplitude erkennbar wäre.

Im weiteren Verlauf kann der Abstand der aufgeschmolzenen Kontaktstücke sich so weit vergrößern, dass der stromschwache Lichtbogen verlischt. Damit ist der Strom in der fehlerhaften Phase unterbrochen. Der der Fehlerstelle am nächsten liegende Schalter detektiert den Phasenausfall und unterbricht die Energiezufuhr dreiphasig. Es kann jedoch auch sein, dass sich die leitfähigen Gase des stromschwachen Lichtbogens ausbreiten und einen Kurzschluss mit einer benachbarten Phase herbeiführen. Dieser Kurzschluss lässt schlagartig einen stromstarken Störlichtbogen entstehen. Dieser stromstarke Störlichtbogen bewegt sich unkontrollierbar innerhalb der Anlage. Die entstehenden heißen Gase in Verbindung mit umherspritzenden geschmolzenen Metallpartikeln sowie die sich aufbauenden Druckbelastungen stellen ein hohes Gefährdungspotential dar. Dieses kann sich je nach konstruktiver Gestaltung auf die Anlage beschränken oder auch in der Nähe befindliche Personen gefährden.

Der stromstarke Störlichtbogen erlischt erst bei Unterbrechung durch den bzw. die Einspeiseschalter. Je nach Anlage können bis zur Auslösung mehr als 100 ms vergehen, wobei innerhalb dieses Zeitraumes der stromstarke Störlichtbogen schwerste Schäden verursacht. Es können Temperaturen im Störlichtbogen von mehreren Tausend Grad und ein erheblicher Druckaufbau innerhalb der Anlage auftreten, sodass eine starke mechanische Belastung der Anlage vorhanden ist. Kommt es im Bereich der (nicht gasdichten) Türen zum Gausaustritt, stellen bereits die austretenden heißen Gase für in der Nähe befindliche Personen eine große, möglicherweise tödliche Gefahr dar. Öffnen sich unter der hohen Durckbelastung die Türen der Schaltanlage, so treten heiße Gase und Metallpartikel ungehindert aus der Anlage aus. Dies stellt eine erhebliche Gefahr für Personen dar. Außerdem sind nach einem derartigen Störfall zeit- und kostenintensive Reparaturarbeiten erforderlich, bis die Anlage erneut in Betrieb genommen werden kann.

Zur Verhinderung von stromstarken Störlichtbögen ist es daher neben der konstruktiven Ausgestaltung der Anlagen bekannt, das Strahlungsspektrum eines stromstarken Störlichtbogens zur Auslösung des bzw. der Einspeiseschalter zu verwenden. In die zu schützenden Anlagenteile werden optische Lichtwellenleitersysteme eingebracht, die in der Lage sind, stromstarke Störlichtbögen durch eine Auswerteinheit zuverlässig zu erkennen, sodass die Einspeiseschalter unverzögert unter Umgehung jeglicher Auswahl abgeschaltet werden können. Unter Berücksichtigung der Eigenzeit des Einspeiseschalters lässt sich die Brenndauer des stromstarken Störlichtbogens auf diese Weise auf unter 100 ms begrenzen, sodass die zerstörerischen Auswirkungen des stromstarken Störlichtbogens verringert werden. Nachteilig ist jedoch, dass aus Kostengründen kaum alle Anlagenteile überwacht werden können und dass es trotzdem noch zu Schäden kommt.

Es ist weiterhin bekannt, die Brenndauer des stromstarken Störlichtbogens auf weniger als 5 ms zu begrenzen, in dem bei einem auftretenden stromstarken Störlichtbogen ein unmittelbar hinter dem Einspeiseschalter befindlicher Kurzschließer geschlossen wird, sodass der Energiefluss bis zum Ausschalten des Einspeiseschalters über diesen Kurzschließer fließt. Damit wird die Energiezufuhr in die Fehlerstelle unterbunden und die Brenndauer des Störlichtbogens sehr stark verringert. Diese kurze Brennbauer verbessert den Personen- und Anlagenschutz und vermeidet langwierige Unterbrechungen. Nachteilig ist der mit dieser Lösung verbundene hohe Kostenaufwand, der trotz unbestrittener technischer Vorteile dieser Lösung einer weiten Verbreitung entgegensteht.

Demgegenüber besteht die Aufgabe der Erfindung darin, ein Verfahren der eingangs genannten Art vorzuschlagen, bei dem auf einfache und kostengünstige Weise das Auftreten von stromstarken Störlichtbögen verhindert werden kann.

Diese Aufgabe wird dadurch gelöst, dass bei Erkennen eines in der Anlage auftretenden, einem stromstarken Störlichtbogen vorausgehenden stromschwachen, einphasigen Lichtbogens durch in der Anlage angeordnete Überwachungseinrichtungen eine Abschaltvorrichtung betätigt wird.

Vorteilhaft werden zur Erkennung eines stromschwachen Lichtbogens durch die Überwachungseinrichtungen die durch den stromschwachen Lichtbogen hervorgerufenen Oberschwingungen im Strom und/oder der Spannung verwendet.

Vorzugsweise überwachen die Überwachungseinrichtungen die einzelnen Phasen der Anlage.

Vorteilhaft überwachen die Überwachungseinrichtungen für den stromschwachen Lichtbogen bei einer 50 Hz-Versorgungsanlage die Frequenzbereiche von 30 Hz bis 500 Hz und/oder 500 Hz bis 30 MHz und/oder den Frequenzbereich oberhalb von 30 MHz.

Durch die vorgeschlagene Lösung ist es möglich, bereits in der Zeit vor dem Auftreten eines stromstarken Störlichtbogens, während der ein vergleichsweise stromschwacher Lichtbogen innerhalb einer Phase brennt, den fehlerhaften Anlagenteil abzuschalten.

Der stromschwache Lichtbogen innerhalb einer Phase stellt eine Nichtlinearität innerhalb des Stromkreises dar. Diese Nichtlinearität führt zu Oberschwingungen im Strom- und Spannungsverlauf. Dieses Oberschwingungsmuster des stromschwachen Störlichtbogens in der einzelnen Phase wird von den Überwachungseinrichtungen erkannt und kann so zur Abschaltung des betroffenen Anlagenteils benutzt werden.

Die vorgeschlagene Lösung hat weiterhin den Vorteil, dass durch die kostengünstig herzustellende Überwachungseinrichtung eine gute Auswahl der abzuschaltenden Anlageteile möglich wird, so dass tatsächlich bei einem auftretenden einphasigen stromschwachen Lichtbogen und damit einem bevorstehenden stromstarken Störlichtbogen nur die betroffenen Anlageteile abgeschaltet werden.

Die Erfindung ist in den Zeichnungen beispielhaft dargestellt. Es zeigen:
- Fig. 1: eine Mittel- oder Niederspannungsschaltanlage in schematischer Darstellung und
- Fig. 2: die Anordnung einer Überwachungseinrichtung in einem dreiphasigen System.

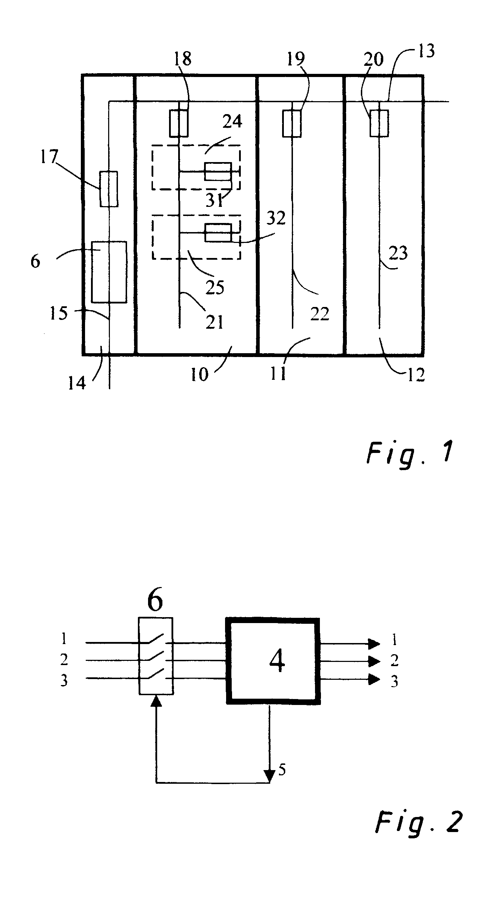

Nach Fig. 1 hat eine Mittel- oder Niederspannungsschaltanlage mehrere nebeneinander angeordnete Schaltfelder 10, 11, 12 und 14. Eine Sammelschiene 15 des Feldes 14 führt über ein Schaltgerät 6 zu einer Sammelschiene 13, die die Felder 10, 11 und 12 miteinander und mit der Sammelschiene 15 verbindet. In den Feldern 10, 11 und 12 sind mit der Sammelschiene 13 Verteilschienen 21, 22 und 23 verbunden, die ihrerseits wiederum mit Funktionsabgängen 24, 25 verbunden sind, wie dies für die Verteilschiene 21 des Feldes 10 beispielhaft dargestellt ist.

In der Sammelschiene 15 ist eine Überwachungseinrichtung 17 angeordnet und nach der Sammelschiene 13 sind Überwachungseinrichtunge 18, 19 und 20 in den jeweiligen Feldern 10, 11 und 12 vorgesehen. Weiterhin sind in den Funktionsabgängen 24 und 25 Überwachungseinrichtungen 31 und 32 angeordnet.

Nach Fig. 2 ist in einem dreiphasigen System mit den in Pfeilrichtung stromdurchschlossenen Stromleitern 1, 2 und 3 ein Schaltgerät 6 angeordnet, das die Stromleiter unterbrechen kann. Hinter dem Schaltgerät 6 ist eine Überwachungseinrichtung 4 vorgesehen, die in der Lage ist, einen stromschwachen Lichtbogen in einem der Stromleiter 1, 2 und 3 zu erkennen. Wird von der Überwachungseinrichtung 4 in einen Stromleiter ein stromschwacher Lichtbogen erkannt, so gibt die Überwachungseinrichtung einen Auslöseimpuls 5 an den Schalter 6, der die Stromzufuhr durch die Stromleiter 1, 2 und 3 unterbricht.

Die Überwachungseinrichtungen 17, 18, 19, 20, 31 und 32 der Fig. 1 entsprechen der Überwachungseinrichtung 4 der Fig. 2.

Das Überwachungssystem 17 überwacht zentral die gesamte Anlage, während die Überwachungseinrichtungen 18, 19 und 20 die jeweiligen Felder 10, 11 und 12 überwachen. Die Überwachungseinrichtungen 31 und 32 überwachen die zugeordneten Funktionsabgänge 24 und 25. Damit ergibt sich, dass in Abhängigkeit von der Anordnung der Überwachungseinrichtung ein Schutz für die gesamte Anlage, das einzelne Feld oder den einzelnen Funktionsabgang möglich ist.

Im Frequenzbereich zwischen 30 Hz und 500 Hz sind die Amplituden der Oberschwingungen, die vom stromschwachen, einphasigen Lichtbogen verursacht werden, in Strom- und Spannungsverläufen bezogen auf die Grundschwingung stark ausgeprägt. Diesem Vorteil steht gegenüber, dass auch andere betriebsmäßige Anlagenkomponenten, beispielsweise leistungselektronische Umrichter, in diesem Frequenzbereich eine ausgeprägte Störintensität aufweisen können.

Im Frequenzbereich zwischen 500 Hz und 30 MHz ist von einer geringen Anzahl anderer Störquellen auszugehen.

Im Frequenzbereich oberhalb von 30 MHz ist von abgestrahlten Störgrößen auszugehen. Das vom einphasigen stromschwachen Lichtbogen abgestrahlte Störspektrum ist als Diagnosekriterium geeignet.

Die Überwachungseinrichtung kann eine oder mehrere Frequenzen oder Frequenzbereiche innerhalb der oben angegebenen Frequenzbereiche überwachen. Für jede dieser überwachten Frequenzen bzw. Frequenzbereiche wird hinsichtlich der Amplitude die Einhaltung eines von den Betriebsbedingungen am Einbauort abhängigen Maximalwertes überwacht. Wird dieser Maximalwert überschritten, so ist dies als Kriterium für einen entstandenen einphasigen stromschwachen Lichtbogen zu sehen.

## Patentansprüche

1. Verfahren zur Vermeidung des Auftretens von stromstarken Störlichtbögen in elektrischen Energieversorgungseinrichtungen und Schaltanlagen für Nieder-, Mittel- und Hochspannungsbereiche, dadurch gekennzeichnet, dass bei Erkennen eines in der Anlage auftretenden, einem stromstarken Störlichtbogen vorausgehenden stromschwachen, einphasigen Lichtbogens durch in der Anlage angeordnete Überwachungseinrichtungen (17, 18, 19, 20, 31, 32) eine Abschaltvorrichtung betätigt wird.

2. Verfahren nach Anspruch 1, dadurch gekennzeichnet, dass zur Erkennung eines stromschwachen, einphasigen Lichtbogens durch die Überwachungseinrichtungen (17, 18, 19, 20, 31, 32) die durch den stromschwachen Lichtbogen hervorgerufenen Oberschwingungen im Strom und/oder der Spannung verwendet werden.

3. Verfahren nach Anspruch 2, dadurch gekennzeichnet, dass die Überwachungseinrichtungen (17, 18, 19, 20, 31, 32) jeweils einzelne Phasen der Anlage überwachen.

4. Verfahren nach einem der Ansprüche 1 bis 3, dadurch gekennzeichnet, dass die Überwachungseinrichtungen für den stromschwachen Lichtbogen bei einer 50 Hz-Anlage die Frequenzbereiche von 30 Hz bis 500 Hz und/oder 500 Hz bis 30 MHz und/oder den Frequenzbereich oberhalb von 30 MHz überwachen.
